# EUROPEAN PATENT SPECIFICATION

(11) **EP 4 335 056 B1**
(45) Date of publication and mention of the grant of the patent: **29.04.2026**
(21) Application number: 22724178.3
(22) Date of filing: 26.04.2022
(51) Int. Cl.: H04L 1/1829, H04L 1/18

(54) **SPS PUCCH HARQ ACK/NACK CONFIGURATION**
SPS-PUCCH-HARQ-ACK/NACK-KONFIGURATION
CONFIGURATION D'ACCUSÉ ACK/D'ACCUSÉ NÉGATIF NACK DE DEMANDE HARQ DE CANAL PUCCH DE PLANIFICATION SPS

(30) Priority: 05.05.2021 GR 20210100301
(43) Date of publication of application: 13.03.2024
(73) Proprietor: QUALCOMM INCORPORATED, San Diego, California 92121-1714 (US)
(72) Inventor: DIMOU, Konstantinos, San Diego, California 92121 (US); ZHOU, Yan, San Diego, California 92121 (US); LUO, Tao, San Diego, California 92121 (US)
(74) Representative: Bardehle Pagenberg Partnerschaft mbB Patentanwälte Rechtsanwälte
(86) International application number: PCT/US2022/026342
(87) International publication number: WO 2022/235456

(56) References cited:
- MODERATOR (NOKIA): "Moderator summary #4 on HARQ-ACK feedback enhancements for NR Rel-17 URLLC/IIoT", vol. RAN WG1, no. e-Meeting; 20210412 - 20210420, 20 April 2021 (2021-04-20), XP051996622, Retrieved from the Internet <URL:https://ftp.3gpp.org/tsg_ran/WG1_RL1/TSGR1_104b-e/Inbox/R1-2104038.zip R1-2104038_[104bis-e-NR-IIOT_URLLC_enh-01]_HARQ _enh_Summary#4.docx> [retrieved on 20210420]
- LG ELECTRONICS: "Discussion on UE feedback enhancement for HARQ-ACK", vol. RAN WG1, no. e-Meeting; 20201026 - 20201113, 24 October 2020 (2020-10-24), XP051946559, Retrieved from the Internet <URL:https://ftp.3gpp.org/tsg_ran/WG1_RL1/TSGR1_103-e/Docs/R1-2008057.zip R1-2008057 URLLC UE feedback enhancement.docx> [retrieved on 20201024]

## Description

### TECHNICAL FIELD

The present disclosure relates generally to communication systems, and more particularly, to configuring deferral or dropping of a hybrid automatic repeat request (HARQ) feedback in a wireless communication system in case of a physical uplink control channel (PUCCH) collision.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

Document Moderator (Nokia): "Moderator summary #4 on HARQ-ACK feedback enhancements for NR Rel-17 URLLC/IIoT", 3GPP TSG RAN WG1 #104bis-e, R1-2104038, e-Meeting, April 12 - 20, 2021 summarizes the proposed Rel-17 enhancements to prevent SPS HARQ-ACK dropping for TDD operation. It is proposed to support SPS HARQ-ACK deferral configured per SPS configuration.

Document LG Electronics: "Discussion on UE feedback enhancement for HARQ-ACK", 3GPP TSG RAN WG1 #103-e, R1-2008057, e-Meeting, October 26 - November 13, 2020 discusses UE feedback enhancements for HARQ-ACK to support URLLC, in terms of enhancing the HARQ-ACK feedback for SPS PDSCH and HARQ-ACK skipping for high reliability PDSCH. For SPS PUCCH occasion overlapping semi-static DL symbol, it is proposed to postpone HARQ-ACK transmission to next SPS PUCCH occasion of corresponding SPS configuration.

### BRIEF SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The invention is defined by the independent claims.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is an example diagram illustrating a configuration of HARQ feedback associated with a PUCCH collision.
FIG. 5 is a communication flow of a method of wireless communication.
FIG. 6 is a flowchart of a method of wireless communication.
FIG. 7 is a flowchart of a method of wireless communication.
FIG. 8 is a flowchart of a method of wireless communication.
FIG. 9 is a flowchart of a method of wireless communication.
FIG. 10 is a diagram illustrating an example of a hardware implementation for an example apparatus.
FIG. 11 is a diagram illustrating an example of a hardware implementation for an example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

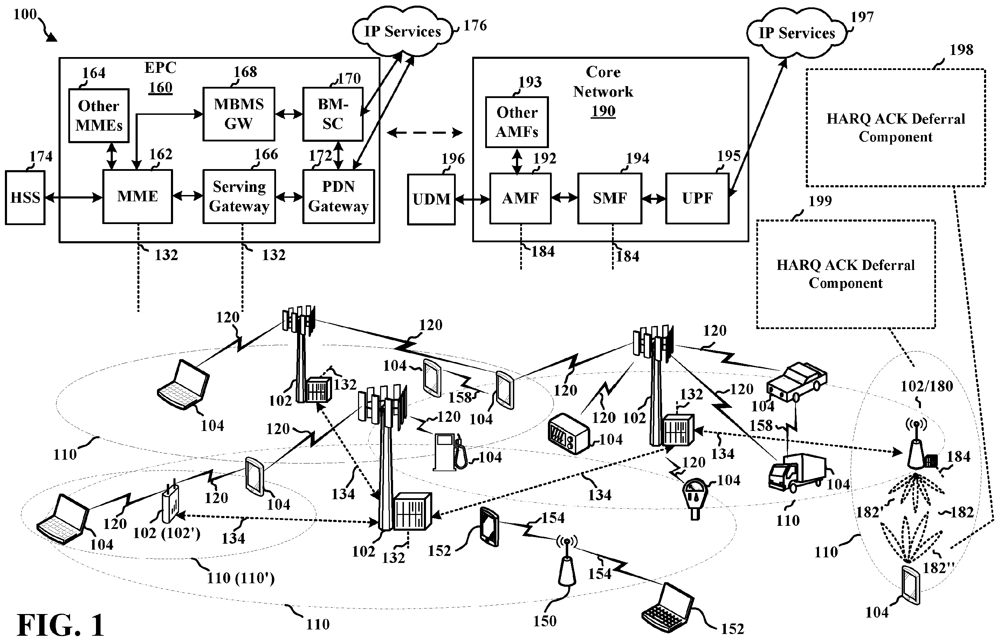

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the UE 104 may include a HARQ ACK deferral component 198 that may be configured to receive, from a base station, at least one downlink packet or at least one downlink packet retransmission. The HARQ ACK deferral component 198 may be configured to determine that a transmission of a HARQ feedback associated with the at least one downlink packet or the at least one downlink packet retransmission corresponds to a PUCCH collision. The HARQ ACK deferral component 198 may be configured to determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion. The HARQ ACK deferral component 198 may be configured to cancel or delay the transmission of the HARQ feedback to the base station based on the determination whether to delay the transmission of the HARQ feedback. In certain aspects, the base station 180 may include a HARQ ACK deferral component 199 that may be configured to transmit, to a UE, at least one downlink packet or at least one downlink packet retransmission. The HARQ ACK deferral component 199 may be configured to receive, from the UE, a transmission of a HARQ feedback associated with the at least one downlink packet or the at least one downlink packet retransmission on a first available PUCCH occasion, the transmission of the HARQ feedback corresponding to a PUCCH collision. Although the following description may be focused on 5G NR, the concepts described herein may be applicable to other similar areas, such as LTE, LTE-A, CDMA, GSM, and other wireless technologies.

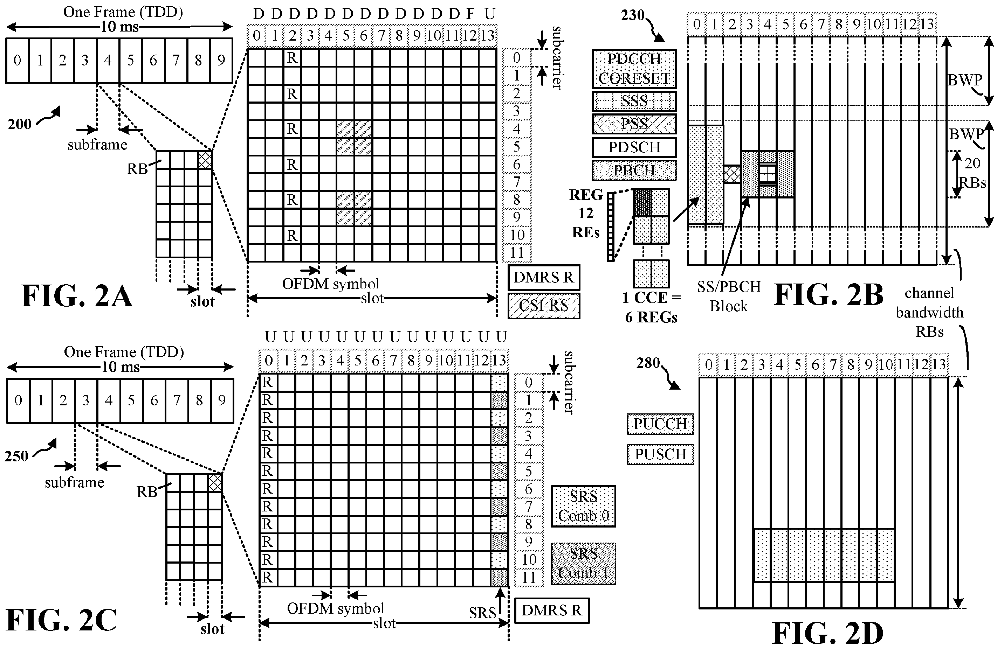

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on whether the cyclic prefix (CP) is normal or extended. For normal CP, each slot may include 14 symbols, and for extended CP, each slot may include 7 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| *µ* | **SCS** | **Cyclic prefix** |
|---|---|---|
| | Δ*f* = 2*^{µ}* ·15 [kHz] | |
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* _{*} 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)) (also referred to herein as HARQ feedback). The PUSCH carries data, and may additionally be used to carry a buffer status report (BSR), a power headroom report (PHR), and/or UCI.

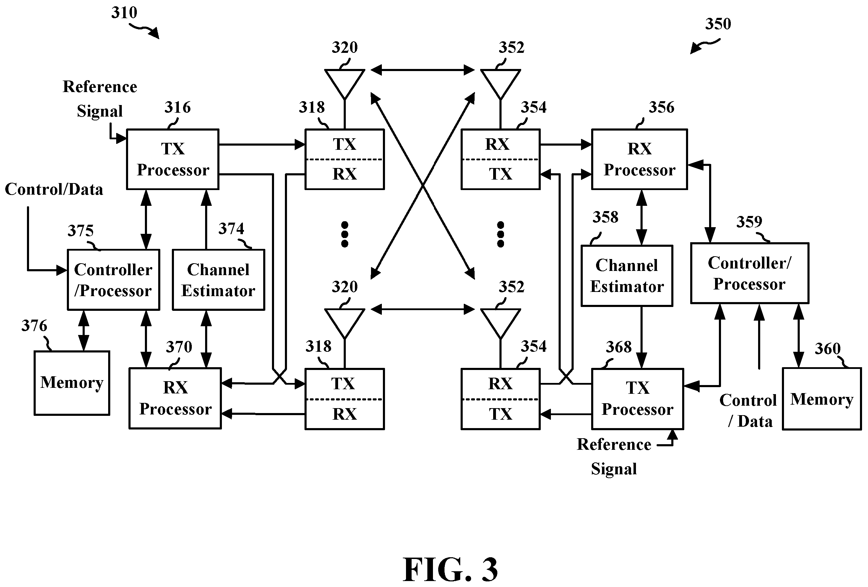

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate a radio frequency (RF) carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with 198 of FIG. 1.

At least one of the TX processor 316, the RX processor 370, and the controller/processor 375 may be configured to perform aspects in connection with 199 of FIG. 1.

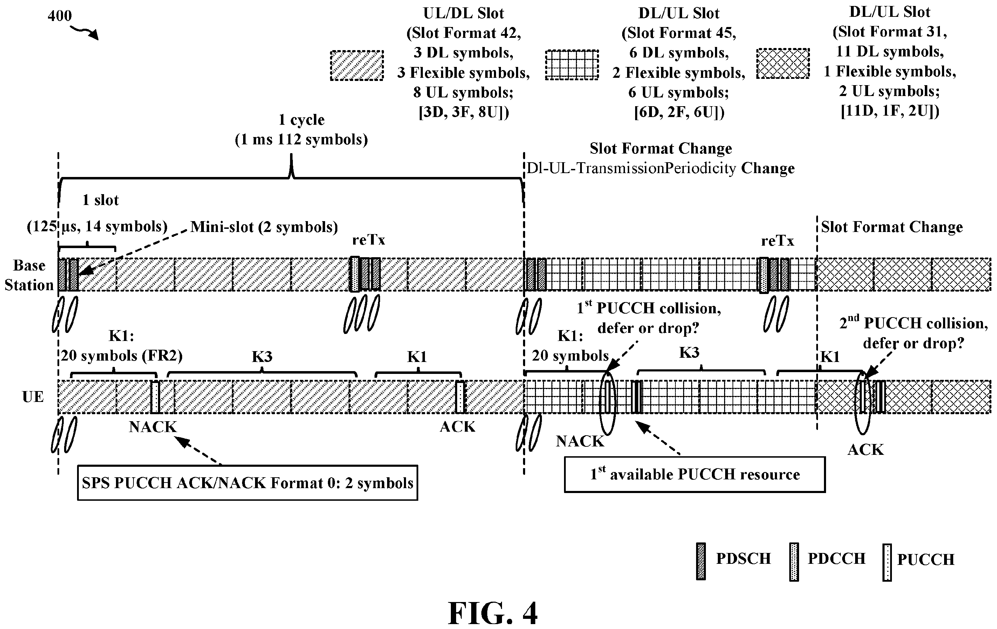

FIG. 4 is an example diagram 400 illustrating a configuration of HARQ feedback associated with a PUCCH collision. The UE may be an industrial IoT (IIOT) UE, such as an industrial sensor. The system may operate in FR2. Each IIOT cycle may last 1 millisecond (ms), may include 112 symbols, and may be divided into 8 slots each of which may last 125 microseconds (µs) and may include 14 symbols. The K1 value may be associated with a delay between downlink data reception over a PDSCH and a corresponding HARQ feedback transmission on uplink over a PUCCH. In the illustrated aspects, K1 may be 20 symbols. The K3 value may be associated with a delay between HARQ feedback (NACK) reception in uplink over a PUCCH and a corresponding retransmission of data in downlink over a PDSCH. K3 may be a number of slots, e.g., 2 slots, 3 slots, 4 slots, 5 slots, etc. A HARQ feedback corresponding to the data retransmission may be transmitted in uplink over a PUCCH.

As illustrated, the DI-UL- TransmissionPeriodicity parameter may be set to 1 ms initially. After the first cycle, the parameter may be changed to 625 µs. The system may be a TDD system. A slot format change from Format 42 to Format 45 may take place after the first cycle. After another 5 slots, an additional slot format change from Format 45 to Format 31 may take place. Accordingly, the number of symbols available for uplink transmission may be reduced with each slot format change.

When a conflicting symbol occurs based on the TDD slot configuration at the symbol scheduled for the HARQ feedback transmission in uplink over a PUCCH based on the K1 value (e.g., according to the TDD slot configuration, the symbol may be a downlink symbol, or may be a flexible symbol configured as a downlink symbol), the HARQ feedback may not be transmitted in uplink as scheduled. This may be referred to herein as a PUCCH collision. The HARQ feedback may be dropped as a result. Alternatively, the HARQ feedback may be deferred (delayed) to the first available PUCCH resource after the originally scheduled symbols for the HARQ feedback.

It may be advantageous to defer the HARQ feedback if the HARQ feedback is potentially useful. For example, a NACK feedback may be useful if there is sufficient time left in the cycle for a downlink retransmission. On the other hand, if the HARQ feedback is not potentially useful (e.g., a NACK feedback may not be useful if there is not sufficient time left in the cycle for a downlink retransmission), transmitting the useless HARQ feedback may unnecessarily waster power, and may create unnecessary interference in uplink. Accordingly, whether to delay or cancel the HARQ feedback may be based on whether the HARQ feedback is potentially useful. The base station may configure the HARQ feedback behavior (e.g., defer/delay versus drop/cancel) in case of a PUCCH collision, e.g., based on semi-persistent scheduling (SPS) through RRC signaling, and/or dynamically through DCI. An SPS configuration may be dynamically overridden through DCI.

In one configuration, the HARQ feedback may be deferred if there is sufficient time in the present cycle for at least one downlink data retransmission after the transmission of the deferred HARQ feedback. Accordingly, the HARQ feedback may be deferred if the time instant of the deferred HARQ feedback (i.e., the occasion of the first available PUCCH resource after the symbols originally scheduled for the HARQ feedback) is earlier than a time instant t0, where t0 = tcycleEnd - (PUCCH duration + K3 + PDSCH duration + DCI duration), where tcycleEnd may be the time instant of the end of the current cycle. Otherwise, the HARQ feedback may be canceled or dropped. The time instant of the end of the current cycle may be known to the UE based on the SPS configuration and the downlink traffic periodicity. Based on a training process, the UE may learn the length of the IIOT cycle. The K3 value may be initially unknown at the UE. Based on a training process, the UE may be able to obtain an estimate of the maximum K3 value. The DCI duration (which may span a number of symbols, e.g., 1 symbol, 2 symbols, 3 symbols, etc.) may be unknown at the UE. Therefore, referring back to FIG. 4, the HARQ feedback may be deferred upon the detection of the first PUCCH collision if there is sufficient time left in the present cycle for at least one downlink data retransmission. On the other hand, the HARQ feedback may be canceled upon the detection of the second PUCCH collision if there is not sufficient time left in the present cycle for another downlink data retransmission.

In one configuration, if the HARQ feedback is a NACK, the HARQ feedback (NACK) may be deferred if there is sufficient time in the present cycle for at least one downlink data retransmission after the transmission of the deferred HARQ feedback, and may be canceled if there is not sufficient time in the present cycle for at least one downlink data retransmission. On the other hand, because a downlink retransmission may be unnecessary when the HARQ feedback is an ACK, if the HARQ feedback is an ACK, the HARQ feedback (ACK) may be deferred if the first available PUCCH resource occurs within a predefined time window from the symbols originally scheduled for the HARQ feedback, even if there is not sufficient time in the present cycle for at least one downlink data retransmission.

In some aspects, the UE may not know the K3 value, the DCI duration, or the IIOT cycle (i.e., the packet expiration time). In one configuration, whether to delay or cancel the HARQ feedback may be based on the occasion of the corresponding downlink data transmission over the PDSCH. In particular, the transmission of the HARQ feedback may be delayed when the downlink transmission associated with the HARQ feedback is transmitted on one of the first n PDSCH occasions (e.g., the first one PDSCH occasion, the first two PDSCH occasions, the first three PDSCH occasions, etc.) within the current IIOT cycle, and may be canceled otherwise (i.e., when the downlink transmission associated with the HARQ feedback is transmitted on a PDSCH occasion after the first n PDSCH occasions within the current IIOT cycle).

In one configuration, the SPS periodicity may coincide with the IIOT cycle. Whether to delay or cancel the HARQ feedback may be based on whether the first available PUCCH resource occurs within a threshold percentage point of the SPS periodicity from the start of the current SPS period. The transmission of the HARQ feedback may be delayed when the first available PUCCH occasion occurs before a threshold percentage point of a current SPS period (e.g., within the first 50% of the current SPS period), and may be canceled when the first available PUCCH occasion occurs after the threshold percentage point of the current SPS period (e.g., not within the first 50% of the current SPS period).

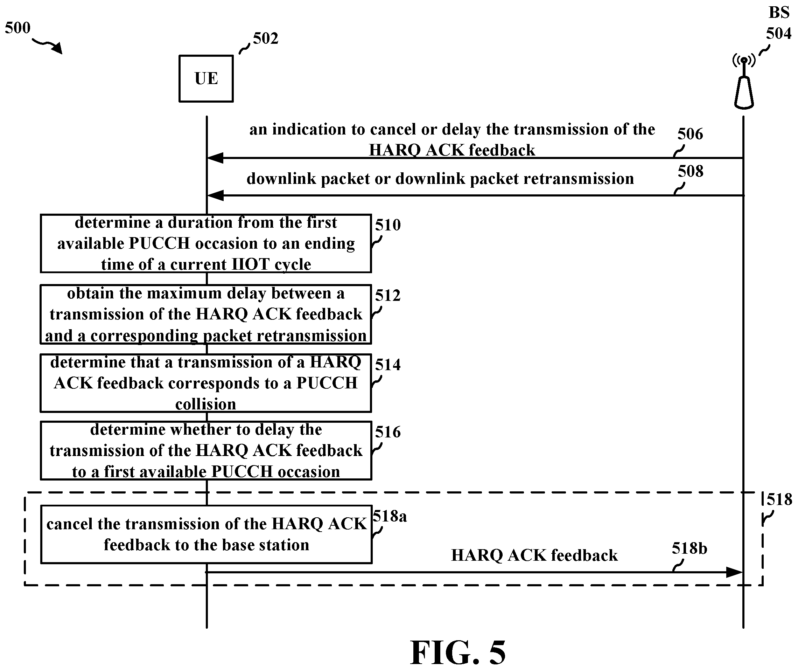

FIG. 5 is a communication flow 500 of a method of wireless communication. The UE 502 may correspond to the UE 104 in FIG. 1 or the UE 350 in FIG. 3. The base station 504 may correspond to the base station 102/180 in FIG. 1 or the base station 310 in FIG. 3. At 506, the base station 504 may transmit to the UE 502, and the UE 502 may receive from the base station 504, an indication to cancel or delay the transmission of the HARQ feedback. In one configuration, the transmission of the HARQ feedback may be based on SPS. In one configuration, the base station 504 may transmit to the UE 502, and the UE 502 may receive from the base station 504, an additional dynamic indication to cancel or delay the transmission of the HARQ feedback (e.g., via a DCI message).

At 508, the base station 504 may transmit to the UE 502, and the UE 502 may receive from the base station 504, at least one downlink packet or at least one downlink packet retransmission.

At 510, the UE 502 may determine a duration from the first available PUCCH occasion to an ending time of a current IIOT cycle.

At 512, the UE 502 may obtain the maximum delay between a transmission of the HARQ feedback and a corresponding packet retransmission on a PDSCH based on a training process (e.g., the maximum K3 value).

At 514, the UE 502 may determine that a transmission of a HARQ feedback associated with the at least one downlink packet or the at least one downlink packet retransmission corresponds to a PUCCH collision. In one configuration, the PUCCH collision may be associated with a conflicting TDD configuration.

At 516, the UE 502 may determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion. The determination of whether to delay the transmission of the HARQ feedback to the first available PUCCH occasion may be based on the indication, received at 506 from the base station 504, to cancel or delay the transmission of the HARQ feedback.

In one configuration, the transmission of the HARQ feedback may be based on a duration from the first available PUCCH occasion to an ending time of a current IIOT cycle when the HARQ feedback is a NACK. In particular, the transmission of the NACK may be delayed when the duration is longer than a threshold, and may not be delayed (e.g., may be canceled) when the duration is shorter than the threshold. The threshold may relate to the time for completing at least one downlink retransmission of the packet associated with the NACK. The threshold may be based on a PUCCH duration, a maximum delay between a transmission of the HARQ feedback and a corresponding packet retransmission on a PDSCH, a PDSCH duration, and a duration associated with a DCI message.

In one configuration, the transmission of the HARQ feedback may be delayed when the HARQ feedback is an ACK. In particular, the transmission of the ACK may be delayed when the first available PUCCH occasion is within a predefined time window from the PUCCH collision. If the first available PUCCH occasion is outside the predefined time window from the PUCCH collision, the transmission of the ACK may not be delayed (e.g., may be canceled).

In one configuration, the transmission of the HARQ feedback may be delayed when the duration is longer than a threshold, and may not be delayed (e.g., may be canceled) when the duration is shorter than the threshold. The threshold may relate to the time for completing at least one downlink retransmission of the packet associated with the NACK. The threshold may be based on a PUCCH duration, a maximum delay between a transmission of the HARQ feedback and a corresponding packet retransmission on a PDSCH, a PDSCH duration, and a duration associated with a DCI message. In one configuration, the threshold may be based on at least one of a PUCCH duration, a maximum delay between a transmission of the HARQ feedback and a corresponding packet retransmission on a PDSCH, a PDSCH duration, or a duration associated with a DCI message.

In one configuration, the transmission of the HARQ feedback may be delayed when the at least one downlink packet or the at least one downlink packet retransmission is transmitted on one of a first number of PDSCH occasions within a current IIOT cycle, and may not be delayed (e.g., may be canceled) when the at least one downlink packet or the at least one downlink packet retransmission is transmitted on a PDSCH occasion after the first number of PDSCH occasions within the current IIOT cycle.

In one configuration, the transmission of the HARQ feedback may be delayed when the first available PUCCH occasion occurs before a threshold percentage point of a current SPS period, and may not be delayed (e.g., may be canceled) when the first available PUCCH occasion occurs after the threshold percentage point of the current SPS period. In one configuration, the current SPS period may correspond to a current IIOT cycle.

At 518, the UE 502 may cancel or delay the transmission of the HARQ feedback to the base station based on the determination whether to delay the transmission of the HARQ feedback. In particular, at 518a, the UE 502 may cancel the transmission of the HARQ feedback to the base station 504. Alternatively, at 518b, the UE 502 may transmit to the base station 504, and the base station 504 may receive from the UE 502, a delayed transmission of a HARQ feedback associated with the at least one downlink packet or the at least one downlink packet retransmission on a first available PUCCH occasion.

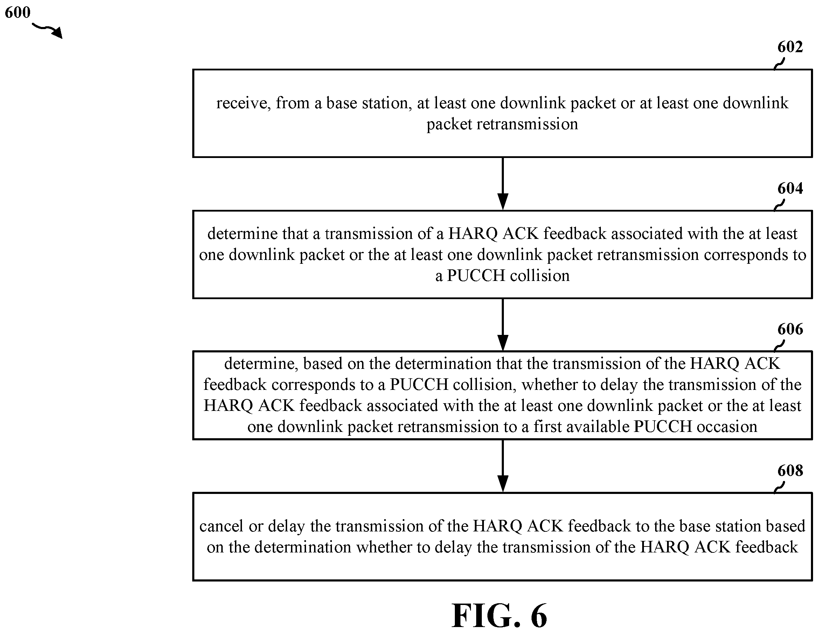

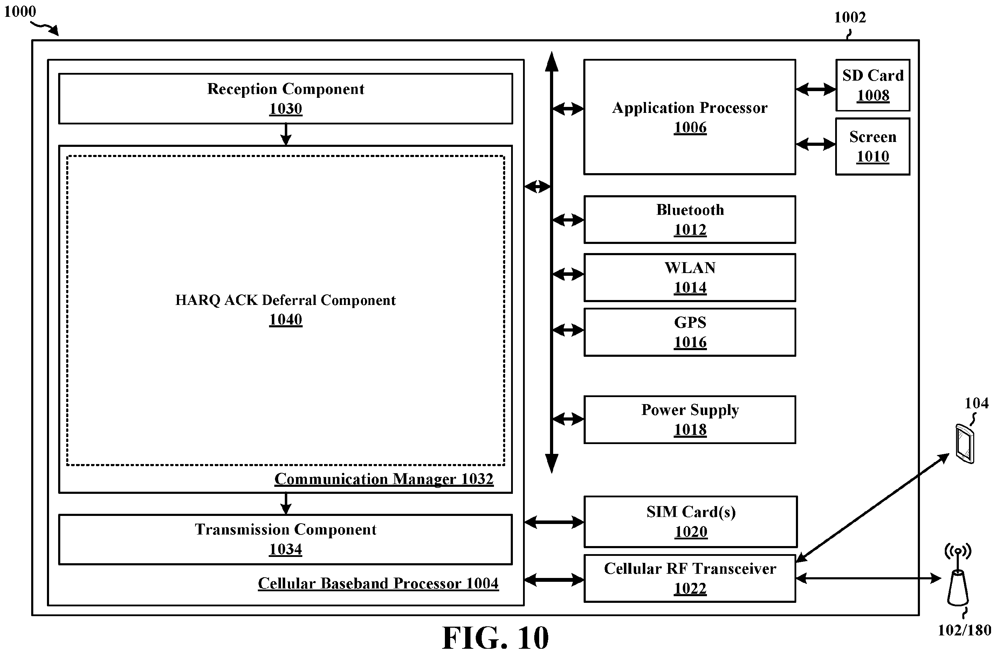

FIG. 6 is a flowchart 600 of a method of wireless communication. The method may be performed by a UE (e.g., the UE 104/350/502; the apparatus 1002). At 602, the UE may receive, from a base station, at least one downlink packet or at least one downlink packet retransmission. For example, 602 may be performed by the HARQ ACK deferral component 1040 in FIG. 10. Referring to FIG. 5, at 508, the UE 502 may receive, from a base station 504, at least one downlink packet or at least one downlink packet retransmission.

At 604, the UE may determine that a transmission of a HARQ feedback associated with the at least one downlink packet or the at least one downlink packet retransmission corresponds to a PUCCH collision. For example, 604 may be performed by the HARQ ACK deferral component 1040 in FIG. 10. Referring to FIG. 5, at 514, the UE 502 may determine that a transmission of a HARQ feedback associated with the at least one downlink packet or the at least one downlink packet retransmission corresponds to a PUCCH collision.

At 606, the UE may determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion. For example, 606 may be performed by the HARQ ACK deferral component 1040 in FIG. 10. Referring to FIG. 5, at 516, the UE 502 may determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion.

At 608, the UE may cancel or delay the transmission of the HARQ feedback to the base station based on the determination whether to delay the transmission of the HARQ feedback. For example, 608 may be performed by the HARQ ACK deferral component 1040 in FIG. 10. Referring to FIG. 5, at 518, the UE 502 may cancel or delay the transmission of the HARQ feedback to the base station 504 based on the determination whether to delay the transmission of the HARQ feedback.

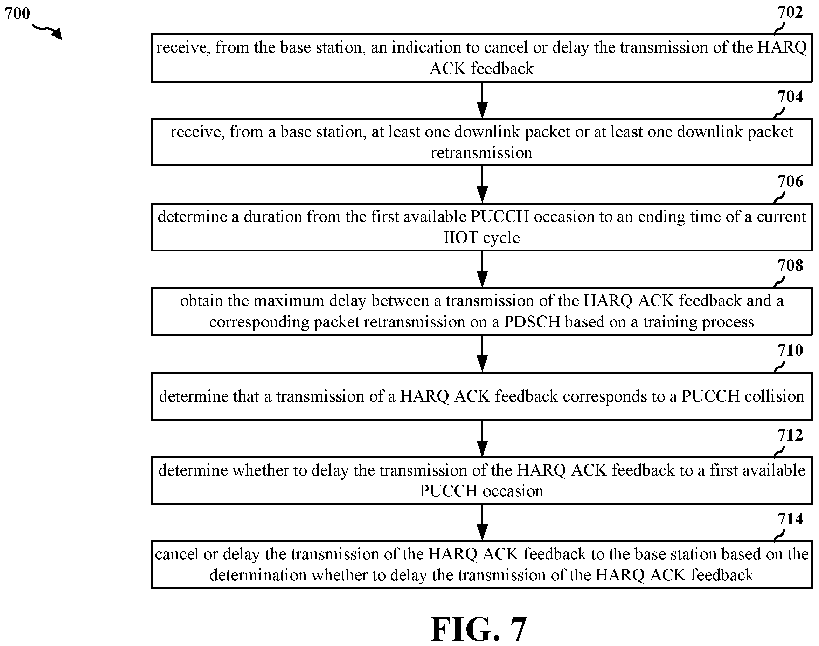

FIG. 7 is a flowchart 700 of a method of wireless communication. The method may be performed by a UE (e.g., the UE 104/350/502; the apparatus 1002). At 704, the UE may receive, from a base station, at least one downlink packet or at least one downlink packet retransmission. For example, 704 may be performed by the HARQ ACK deferral component 1040 in FIG. 10. Referring to FIG. 5, at 508, the UE 502 may receive, from a base station 504, at least one downlink packet or at least one downlink packet retransmission.

At 710, the UE may determine that a transmission of a HARQ feedback associated with the at least one downlink packet or the at least one downlink packet retransmission corresponds to a PUCCH collision. For example, 710 may be performed by the HARQ ACK deferral component 1040 in FIG. 10. Referring to FIG. 5, at 514, the UE 502 may determine that a transmission of a HARQ feedback associated with the at least one downlink packet or the at least one downlink packet retransmission corresponds to a PUCCH collision.

At 712, the UE may determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion. For example, 712 may be performed by the HARQ ACK deferral component 1040 in FIG. 10. Referring to FIG. 5, at 516, the UE 502 may determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion.

At 714, the UE may cancel or delay the transmission of the HARQ feedback to the base station based on the determination whether to delay the transmission of the HARQ feedback. For example, 714 may be performed by the HARQ ACK deferral component 1040 in FIG. 10. Referring to FIG. 5, at 518, the UE 502 may cancel or delay the transmission of the HARQ feedback to the base station 504 based on the determination whether to delay the transmission of the HARQ feedback.

In one configuration, at 706, the UE may determine a duration from the first available PUCCH occasion to an ending time of a current IIOT cycle. For example, 706 may be performed by the HARQ ACK deferral component 1040 in FIG. 10. Referring to FIG. 5, at 510, the UE 502 may determine a duration from the first available PUCCH occasion to an ending time of a current IIOT cycle.

In one configuration, the ending time of the current IIOT cycle may be based on an IIOT cycle duration corresponding to a training process.

In one configuration, the determination whether to delay the transmission of the HARQ feedback may be based on the duration when the HARQ feedback is a NACK.

In one configuration, determining whether to delay the transmission of the HARQ feedback may include determining to delay the transmission of the HARQ feedback when the HARQ feedback is an ACK.

In one configuration, the determination whether to delay the transmission of the HARQ feedback may be based on the duration.

In one configuration, determining whether to delay the transmission of the HARQ feedback may include determining to delay the transmission of the HARQ feedback when the duration is longer than a threshold, and may include determining not to delay the transmission of the HARQ feedback when the duration is shorter than the threshold.

In one configuration, the threshold may be based on at least one of a PUCCH duration, a maximum delay between a transmission of the HARQ feedback and a corresponding packet retransmission on a PDSCH, a PDSCH duration, or a duration associated with a DCI message.

In one configuration, at 708, the UE may obtain the maximum delay between a transmission of the HARQ feedback and a corresponding packet retransmission on a PDSCH based on a training process. For example, 708 may be performed by the HARQ ACK deferral component 1040 in FIG. 10. Referring to FIG. 5, at 512, the UE 502 may obtain the maximum delay between a transmission of the HARQ feedback and a corresponding packet retransmission on a PDSCH based on a training process.

In one configuration, determining whether to delay the transmission of the HARQ feedback may include determining to delay the transmission of the HARQ feedback when the at least one downlink packet or the at least one downlink packet retransmission is received on one of a first number of PDSCH occasions within a current IIOT cycle, and may include determining not to delay the transmission of the HARQ feedback when the at least one downlink packet or the at least one downlink packet retransmission is received on a PDSCH occasion after the first number of PDSCH occasions within the current IIOT cycle.

In one configuration, determining whether to delay the transmission of the HARQ feedback may include determining to delay the transmission of the HARQ feedback when the first available PUCCH occasion occurs before a threshold percentage point of a current SPS period, and may include determining not to delay the transmission of the HARQ feedback when the first available PUCCH occasion occurs after the threshold percentage point of the current SPS period.

In one configuration, the current SPS period may correspond to a current IIOT cycle.

In one configuration, the PUCCH collision may be associated with a conflicting TDD configuration.

In one configuration, the transmission of the HARQ feedback may be based on SPS.

In one configuration, at 702, the UE may receive, from the base station, an indication to cancel or delay the transmission of the HARQ feedback. For example, 702 may be performed by the HARQ ACK deferral component 1040 in FIG. 10. Referring to FIG. 5, at 506, the UE 502 may receive, from the base station 504, an indication to cancel or delay the transmission of the HARQ feedback

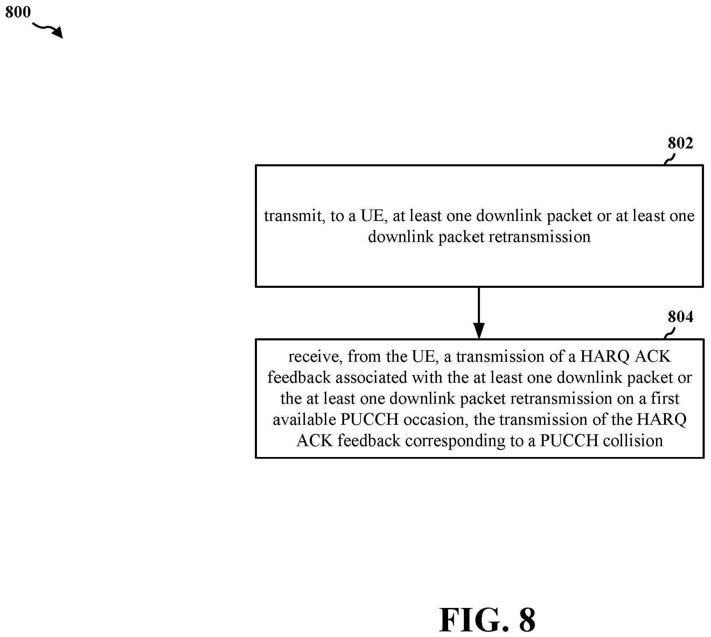

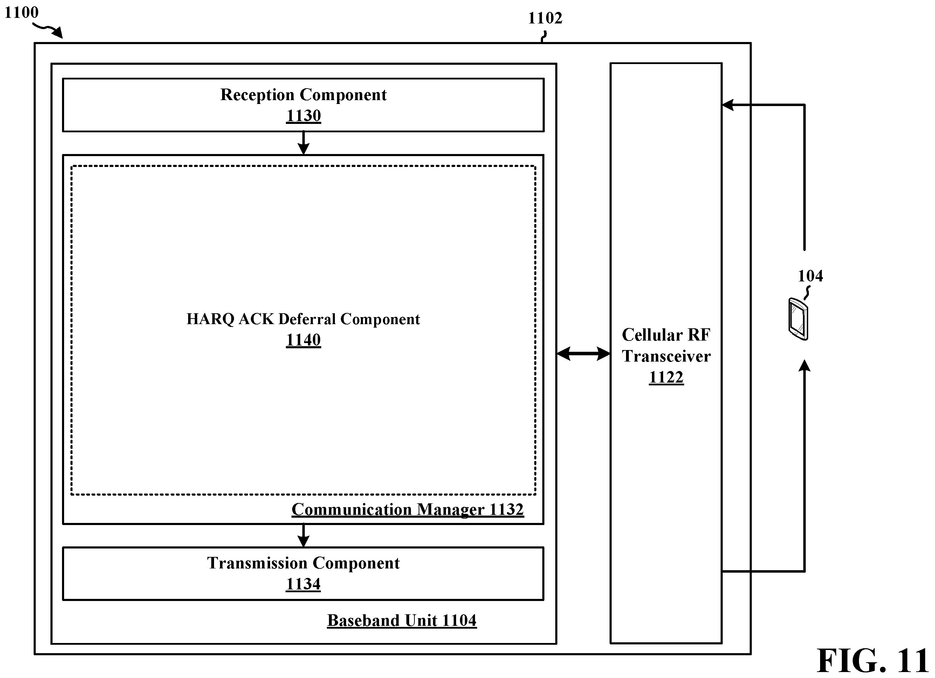

FIG. 8 is a flowchart 800 of a method of wireless communication. The method may be performed by a base station (e.g., the base station 102/180/310/504; the apparatus 1102). At 802, the base station may transmit, to a UE, at least one downlink packet or at least one downlink packet retransmission. For example, 802 may be performed by the HARQ ACK deferral component 1140 in FIG. 11. Referring to FIG. 5, at 508, the base station 504 may transmit, to a UE 502, at least one downlink packet or at least one downlink packet retransmission.

At 804, the base station may receive, from the UE, a transmission of a HARQ feedback associated with the at least one downlink packet or the at least one downlink packet retransmission on a first available PUCCH occasion. The transmission of the HARQ feedback may correspond to a PUCCH collision. For example, 804 may be performed by the HARQ ACK deferral component 1140 in FIG. 11. Referring to FIG. 5, at 518b, the base station 504 may receive, from the UE 502, a transmission of a HARQ feedback associated with the at least one downlink packet or the at least one downlink packet retransmission on a first available PUCCH occasion.

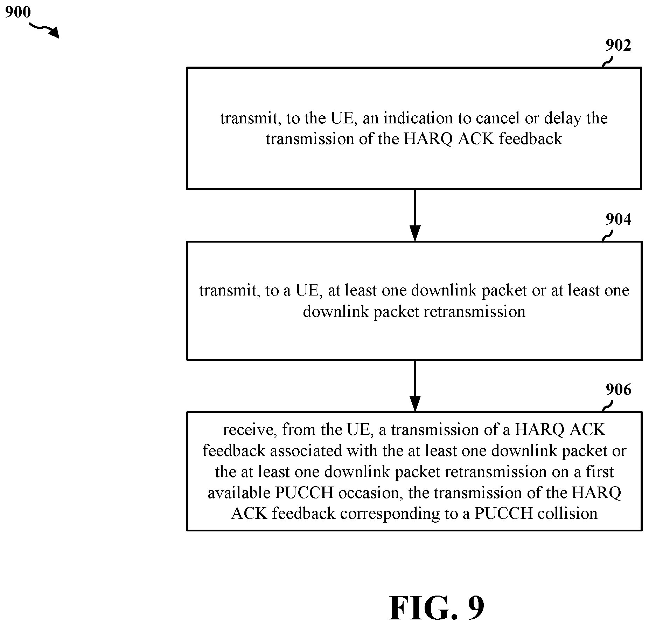

FIG. 9 is a flowchart 900 of a method of wireless communication. The method may be performed by a base station (e.g., the base station 102/180/310/504; the apparatus 1102). At 904, the base station may transmit, to a UE, at least one downlink packet or at least one downlink packet retransmission. For example, 904 may be performed by the HARQ ACK deferral component 1140 in FIG. 11. Referring to FIG. 5, at 508, the base station 504 may transmit, to a UE 502, at least one downlink packet or at least one downlink packet retransmission.

At 906, the base station may receive, from the UE, a transmission of a HARQ feedback associated with the at least one downlink packet or the at least one downlink packet retransmission on a first available PUCCH occasion. The transmission of the HARQ feedback may correspond to a PUCCH collision. For example, 906 may be performed by the HARQ ACK deferral component 1140 in FIG. 11. Referring to FIG. 5, at 518b, the base station 504 may receive, from the UE 502, a transmission of a HARQ feedback associated with the at least one downlink packet or the at least one downlink packet retransmission on a first available PUCCH occasion.

In one configuration, the transmission of the HARQ feedback may be based on a duration from the first available PUCCH occasion to an ending time of a current IIOT cycle when the HARQ feedback is a NACK.

In one configuration, the transmission of the HARQ feedback may be delayed when the HARQ feedback is an ACK.

In one configuration, the transmission of the HARQ feedback may be based on a duration from the first available PUCCH occasion to an ending time of a current IIOT cycle.

In one configuration, the ending time of the current IIOT cycle may be based on an IIOT cycle duration.

In one configuration, the transmission of the HARQ feedback may be delayed when the duration is longer than a threshold, and may not be delayed when the duration is shorter than the threshold.

In one configuration, the threshold may be based on at least one of a PUCCH duration, a maximum delay between a transmission of the HARQ feedback and a corresponding packet retransmission on a PDSCH, a PDSCH duration, or a duration associated with a DCI message.

In one configuration, the transmission of the HARQ feedback may be delayed when the at least one downlink packet or the at least one downlink packet retransmission is transmitted on one of a first number of PDSCH occasions within a current IIOT cycle, and may not be delayed when the at least one downlink packet or the at least one downlink packet retransmission is transmitted on a PDSCH occasion after the first number of PDSCH occasions within the current IIOT cycle.

In one configuration, the transmission of the HARQ feedback may be delayed when the first available PUCCH occasion occurs before a threshold percentage point of a current SPS period, and may not be delayed when the first available PUCCH occasion occurs after the threshold percentage point of the current SPS period.

In one configuration, the current SPS period may correspond to a current IIOT cycle.

In one configuration, the PUCCH collision may be associated with a conflicting TDD configuration.

In one configuration, the transmission of the HARQ feedback may be based on SPS.

In one configuration, at 902, the base station may transmit, to the UE, an indication to cancel or delay the transmission of the HARQ feedback. For example, 902 may be performed by the HARQ ACK deferral component 1140 in FIG. 11. Referring to FIG. 5, at 506, the base station 504 may transmit, to the UE 502, an indication to cancel or delay the transmission of the HARQ feedback.

FIG. 10 is a diagram 1000 illustrating an example of a hardware implementation for an apparatus 1002. The apparatus 1002 may be a UE, a component of a UE, or may implement UE functionality. In some aspects, the apparatus1002 may include a cellular baseband processor 1004 (also referred to as a modem) coupled to a cellular RF transceiver 1022. In some aspects, the apparatus 1002 may further include one or more subscriber identity modules (SIM) cards 1020, an application processor 1006 coupled to a secure digital (SD) card 1008 and a screen 1010, a Bluetooth module 1012, a wireless local area network (WLAN) module 1014, a Global Positioning System (GPS) module 1016, or a power supply 1018. The cellular baseband processor 1004 communicates through the cellular RF transceiver 1022 with the UE 104 and/or BS 102/180. The cellular baseband processor 1004 may include a computer-readable medium / memory. The computer-readable medium / memory may be non-transitory. The cellular baseband processor 1004 is responsible for general processing, including the execution of software stored on the computer-readable medium / memory. The software, when executed by the cellular baseband processor 1004, causes the cellular baseband processor 1004 to perform the various functions described *supra.* The computer-readable medium / memory may also be used for storing data that is manipulated by the cellular baseband processor 1004 when executing software. The cellular baseband processor 1004 further includes a reception component 1030, a communication manager 1032, and a transmission component 1034. The communication manager 1032 includes the one or more illustrated components. The components within the communication manager 1032 may be stored in the computer-readable medium / memory and/or configured as hardware within the cellular baseband processor 1004. The cellular baseband processor 1004 may be a component of the UE 350 and may include the memory 360 and/or at least one of the TX processor 368, the RX processor 356, and the controller/processor 359. In one configuration, the apparatus 1002 may be a modem chip and include just the baseband processor 1004, and in another configuration, the apparatus 1002 may be the entire UE (e.g., see 350 of FIG. 3) and include the additional modules of the apparatus 1002.

The communication manager may 1032 include a HARQ ACK deferral component 1040 that may be configured to receive, from the base station, an indication to cancel or delay the transmission of the HARQ feedback, e.g., as described in connection with 702 in FIG. 7. The HARQ ACK deferral component 1040 may be configured to receive, from a base station, at least one downlink packet or at least one downlink packet retransmission, e.g., as described in connection with 602 in FIG. 6 and 704 in FIG. 7. The HARQ ACK deferral component 1040 may be configured to determine a duration from the first available PUCCH occasion to an ending time of a current IIOT cycle, e.g., as described in connection with 706 in FIG. 7. The HARQ ACK deferral component 1040 may be configured to obtain the maximum delay between a transmission of the HARQ feedback and a corresponding packet retransmission on a PDSCH based on a training process, e.g., as described in connection with 708 in FIG. 7. The HARQ ACK deferral component 1040 may be configured to determine that a transmission of a HARQ feedback associated with the at least one downlink packet or the at least one downlink packet retransmission corresponds to a PUCCH collision, e.g., as described in connection with 604 in FIG. 6 and 710 in FIG. 7. The HARQ ACK deferral component 1040 may be configured to determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion, e.g., as described in connection with 606 in FIG. 6 and 712 in FIG. 7. The HARQ ACK deferral component 1040 may be configured to cancel or delay the transmission of the HARQ feedback to the base station based on the determination whether to delay the transmission of the HARQ feedback, e.g., as described in connection with 608 in FIG. 6 and 714 in FIG. 7.

The apparatus may include additional components that perform each of the blocks of the algorithm in the flowcharts of FIGs. 5-7. As such, each block in the flowcharts of FIGs. 5-7 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1002 may include a variety of components configured for various functions. In one configuration, the apparatus 1002, and in particular the cellular baseband processor 1004, includes means for receiving, from a base station, at least one downlink packet or at least one downlink packet retransmission. The apparatus 1002 may include means for determining that a transmission of a HARQ feedback associated with the at least one downlink packet or the at least one downlink packet retransmission corresponds to a PUCCH collision. The apparatus 1002 may include means for determining, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion. The apparatus 1002 may include means for canceling or delaying the transmission of the HARQ feedback to the base station based on the determination whether to delay the transmission of the HARQ feedback.

In one configuration, the apparatus 1002 may include means for determining a duration from the first available PUCCH occasion to an ending time of a current IIOT cycle. In one configuration, the ending time of the current IIOT cycle may be based on an IIOT cycle duration corresponding to a training process. In one configuration, the determination whether to delay the transmission of the HARQ feedback may be based on the duration when the HARQ feedback is a NACK. In one configuration, determining whether to delay the transmission of the HARQ feedback may include determining to delay the transmission of the HARQ feedback when the HARQ feedback is an ACK. In one configuration, the determination whether to delay the transmission of the HARQ feedback may be based on the duration. In one configuration, determining whether to delay the transmission of the HARQ feedback may include determining to delay the transmission of the HARQ feedback when the duration is longer than a threshold, and may include determining not to delay the transmission of the HARQ feedback when the duration is shorter than the threshold. In one configuration, the threshold may be based on at least one of a PUCCH duration, a maximum delay between a transmission of the HARQ feedback and a corresponding packet retransmission on a PDSCH, a PDSCH duration, or a duration associated with a DCI message. In one configuration, the apparatus 1002 may include means for obtaining the maximum delay between a transmission of the HARQ feedback and a corresponding packet retransmission on a PDSCH based on a training process. In one configuration, determining whether to delay the transmission of the HARQ feedback may include determining to delay the transmission of the HARQ feedback when the at least one downlink packet or the at least one downlink packet retransmission is received on one of a first number of PDSCH occasions within a current IIOT cycle, and may include determining not to delay the transmission of the HARQ feedback when the at least one downlink packet or the at least one downlink packet retransmission is received on a PDSCH occasion after the first number of PDSCH occasions within the current IIOT cycle. In one configuration, determining whether to delay the transmission of the HARQ feedback may include determining to delay the transmission of the HARQ feedback when the first available PUCCH occasion occurs before a threshold percentage point of a current SPS period, and may include determining not to delay the transmission of the HARQ feedback when the first available PUCCH occasion occurs after the threshold percentage point of the current SPS period. In one configuration, the current SPS period may correspond to a current IIOT cycle. In one configuration, the PUCCH collision may be associated with a conflicting TDD configuration. In one configuration, the transmission of the HARQ feedback may be based on SPS. In one configuration, the apparatus 1002 may include means for receiving, from the base station, an indication to cancel or delay the transmission of the HARQ feedback.

The means may be one or more of the components of the apparatus 1002 configured to perform the functions recited by the means. As described *supra,* the apparatus 1002 may include the TX Processor 368, the RX Processor 356, and the controller/processor 359. As such, in one configuration, the means may be the TX Processor 368, the RX Processor 356, and the controller/processor 359 configured to perform the functions recited by the means.

FIG. 11 is a diagram 1100 illustrating an example of a hardware implementation for an apparatus 1102. The apparatus 1102 may be a base station, a component of a base station, or may implement base station functionality. In some aspects, the apparatus 1002 may include a baseband unit 1104. The baseband unit 1104 may communicate through a cellular RF transceiver 1122 with the UE 104. The baseband unit 1104 may include a computer-readable medium / memory. The baseband unit 1104 is responsible for general processing, including the execution of software stored on the computer-readable medium / memory. The software, when executed by the baseband unit 1104, causes the baseband unit 1104 to perform the various functions described *supra.* The computer-readable medium / memory may also be used for storing data that is manipulated by the baseband unit 1104 when executing software. The baseband unit 1104 further includes a reception component 1130, a communication manager 1132, and a transmission component 1134. The communication manager 1132 includes the one or more illustrated components. The components within the communication manager 1132 may be stored in the computer-readable medium / memory and/or configured as hardware within the baseband unit 1104. The baseband unit 1104 may be a component of the base station 310 and may include the memory 376 and/or at least one of the TX processor 316, the RX processor 370, and the controller/processor 375.

The communication manager 1132 may include a HARQ ACK deferral component 1140 that may be configured to transmit, to the UE, an indication to cancel or delay the transmission of the HARQ feedback, e.g., as described in connection with 902 in FIG. 9. The HARQ ACK deferral component 1140 may be configured to transmit, to a UE, at least one downlink packet or at least one downlink packet retransmission, e.g., as described in connection with 802 in FIG. 8 and 904 in FIG. 9. The HARQ ACK deferral component 1140 may be configured to receive, from the UE, a transmission of a HARQ feedback associated with the at least one downlink packet or the at least one downlink packet retransmission on a first available PUCCH occasion, e.g., as described in connection with 804 in FIG. 8 and 906 in FIG. 9.

The apparatus may include additional components that perform each of the blocks of the algorithm in the flowcharts of FIGs. 5, 8, and 9. As such, each block in the flowcharts of FIGs. 5, 8, and 9 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1102 may include a variety of components configured for various functions. In one configuration, the apparatus 1102, and in particular the baseband unit 1104, includes means for transmitting, to a UE, at least one downlink packet or at least one downlink packet retransmission. The apparatus 1102 may include means for receiving, from the UE, a transmission of a HARQ feedback associated with the at least one downlink packet or the at least one downlink packet retransmission on a first available PUCCH occasion, the transmission of the HARQ feedback corresponding to a PUCCH collision.

In one configuration, the transmission of the HARQ feedback may be based on a duration from the first available PUCCH occasion to an ending time of a current IIOT cycle when the HARQ feedback is a NACK. In one configuration, the transmission of the HARQ feedback may be delayed when the HARQ feedback is an ACK. In one configuration, the transmission of the HARQ feedback may be based on a duration from the first available PUCCH occasion to an ending time of a current IIOT cycle. In one configuration, the ending time of the current IIOT cycle may be based on an IIOT cycle duration. In one configuration, the transmission of the HARQ feedback may be delayed when the duration is longer than a threshold, and may not be delayed when the duration is shorter than the threshold. In one configuration, the threshold may be based on at least one of a PUCCH duration, a maximum delay between a transmission of the HARQ feedback and a corresponding packet retransmission on a PDSCH, a PDSCH duration, or a duration associated with a DCI message. In one configuration, the transmission of the HARQ feedback may be delayed when the at least one downlink packet or the at least one downlink packet retransmission is transmitted on one of a first number of PDSCH occasions within a current IIOT cycle, and may not be delayed when the at least one downlink packet or the at least one downlink packet retransmission is transmitted on a PDSCH occasion after the first number of PDSCH occasions within the current IIOT cycle. In one configuration, the transmission of the HARQ feedback may be delayed when the first available PUCCH occasion occurs before a threshold percentage point of a current SPS period, and may not be delayed when the first available PUCCH occasion occurs after the threshold percentage point of the current SPS period. In one configuration, the current SPS period may correspond to a current IIOT cycle. In one configuration, the PUCCH collision may be associated with a conflicting TDD configuration. In one configuration, the transmission of the HARQ feedback may be based on SPS. In one configuration, the apparatus 1102 may include means for transmitting, to the UE, an indication to cancel or delay the transmission of the HARQ feedback.

The means may be one or more of the components of the apparatus 1102 configured to perform the functions recited by the means. As described supra, the apparatus 1102 may include the TX Processor 316, the RX Processor 370, and the controller/processor 375. As such, in one configuration, the means may be the TX Processor 316, the RX Processor 370, and the controller/processor 375 configured to perform the functions recited by the means.

Therefore, according to aspects described herein, the UE may receive, from a base station, at least one downlink packet or at least one downlink packet retransmission. The UE may determine that a transmission of a HARQ feedback associated with the at least one downlink packet or the at least one downlink packet retransmission corresponds to a PUCCH collision. The UE may determine, based on the determination that the transmission of the HARQ feedback corresponds to a PUCCH collision, whether to delay the transmission of the HARQ feedback associated with the at least one downlink packet or the at least one downlink packet retransmission to a first available PUCCH occasion. The UE may cancel or delay the transmission of the HARQ feedback to the base station based on the determination whether to delay the transmission of the HARQ feedback. Accordingly, the HARQ feedback may be deferred to the first available PUCCH occasion if the HARQ feedback is potentially useful, and may be canceled or dropped if the HARQ feedback is not potentially useful. By canceling/dropping the unnecessary HARQ feedback, the UE power consumption may be reduced as the power spent on searching for available PUCCH resources may be reduced. Further, uplink interference may be reduced as the SPS HARQ feedback that cannot be used is dropped and not transmitted.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

## Claims

1. An apparatus (104) for wireless communication at a user equipment, UE, comprising:
a memory; and
at least one processor coupled to the memory and configured to:
receive (602), from a base station, at least one downlink packet or at least one downlink packet retransmission;
determine that a transmission of a hybrid automatic repeat request, HARQ feedback associated with the at least one downlink packet or the at least one downlink packet retransmission corresponds to a physical uplink control channel, PUCCH collision;
determine (604), based on the determination that the transmission of the HARQ feedback corresponds to a PUCCH collision, whether to delay the transmission of the HARQ feedback associated with the at least one downlink packet or the at least one downlink packet retransmission to a first available PUCCH occasion, wherein the determining includes determining to delay the transmission of the HARQ feedback when the HARQ feedback is an ACK; and
cancel or delay (608) the transmission of the HARQ feedback to the base station based on the determination whether to delay the transmission of the HARQ feedback.

2. The apparatus (104) of claim 1, the at least one processor being further configured to:
determine a duration from the first available PUCCH occasion to an ending time of a current industrial internet of things, IIOT cycle.

3. The apparatus (104) of claim 2, wherein the ending time of the current IIOT cycle is based on an IIOT cycle duration corresponding to a training process.

4. The apparatus (104) of claim 2, wherein the determination whether to delay the transmission of the HARQ feedback is based on the duration when the HARQ feedback is a negative ACK, NACK.

5. The apparatus (104) of claim 2, wherein the determination whether to delay the transmission of the HARQ feedback is based on the duration.

6. The apparatus (104) of claim 5, wherein determining whether to delay the transmission of the HARQ feedback comprises the at least one processor configured to determine to delay the transmission of the HARQ feedback when the duration is longer than a threshold, and comprises the at least one processor configured to determine not to delay the transmission of the HARQ feedback when the duration is shorter than the threshold, wherein the threshold is based on at least one of a PUCCH duration, a maximum delay between a transmission of the HARQ feedback and a corresponding packet retransmission on a physical downlink share channel, PDSCH, a PDSCH duration, or a duration associated with a downlink control information, DCI message, wherein the at least one processor being further configured to:
obtain the maximum delay between a transmission of the HARQ feedback and a corresponding packet retransmission on a PDSCH based on a training process.

7. The apparatus (104) of claim 1, wherein determining whether to delay the transmission of the HARQ feedback comprises the at least one processor configured to determine to delay the transmission of the HARQ feedback when the at least one downlink packet or the at least one downlink packet retransmission is received on one of a first number of physical downlink shared channel, PDSCH occasions within a current industrial internet of things, IIOT cycle, and comprises the at least one processor configured to determine not to delay the transmission of the HARQ feedback when the at least one downlink packet or the at least one downlink packet retransmission is received on a PDSCH occasion after the first number of PDSCH occasions within the current IIOT cycle.

8. The apparatus (104) of claim 1, wherein determining whether to delay the transmission of the HARQ feedback comprises the at least one processor configured to determine to delay the transmission of the HARQ feedback when the first available PUCCH occasion occurs before a threshold percentage point of a current semi-persistent scheduling, SPS period, and comprises the at least one processor configured to determine not to delay the transmission of the HARQ feedback when the first available PUCCH occasion occurs after the threshold percentage point of the current SPS period, wherein the current SPS period corresponds to a current industrial internet of things, IIOT cycle.

9. The apparatus (104) of claim 1, wherein the PUCCH collision is associated with a conflicting time division duplexing, TDD configuration.

10. The apparatus (104) of claim 1, wherein the transmission of the HARQ feedback is based on semi-persistent scheduling, SPS.

11. The apparatus (104) of claim 1, the at least one processor being further configured to:
receive, from the base station, an indication to cancel or delay the transmission of the HARQ feedback.

12. A method (600) of wireless communication at a user equipment (UE), comprising:
receiving (602), from a base station, at least one downlink packet or at least one downlink packet retransmission;
determining (604) that a transmission of a hybrid automatic repeat request, HARQ feedback associated with the at least one downlink packet or the at least one downlink packet retransmission corresponds to a physical uplink control channel, PUCCH collision;
determining (606), based on the determination that the transmission of the HARQ feedback corresponds to a PUCCH collision, whether to delay the transmission of the HARQ feedback associated with the at least one downlink packet or the at least one downlink packet retransmission to a first available PUCCH occasion, wherein the determining includes determining to delay the transmission of the HARQ feedback when the HARQ feedback is an ACK; and
canceling or delaying (608) the transmission of the HARQ feedback to the base station based on the determination whether to delay the transmission of the HARQ feedback.

13. An apparatus (102) for wireless communication at a base station, comprising:
a memory; and
at least one processor coupled to the memory and configured to:
transmit (802), to a user equipment, UE, at least one downlink packet or at least one downlink packet retransmission; and
receive (804), from the UE, a transmission of a hybrid automatic repeat request, HARQ feedback associated with the at least one downlink packet or the at least one downlink packet retransmission on a first available physical uplink control channel, PUCCH occasion, the transmission of the HARQ feedback corresponding to a PUCCH collision, wherein the at least one processor is configured to receive a delayed transmission of the HARQ feedback when the HARQ feedback is an ACK.

14. A method (800) of wireless communication at a base station, comprising:
transmitting (802), to a user equipment, UE, at least one downlink packet or at least one downlink packet retransmission; and
receiving (804), from the UE, a transmission of a hybrid automatic repeat request, HARQ feedback associated with the at least one downlink packet or the at least one downlink packet retransmission on a first available physical uplink control channel, PUCCH occasion, the transmission of the HARQ feedback corresponding to a PUCCH collision, wherein the receiving is a receiving of a delayed transmission of the HARQ feedback when the HARQ feedback is an ACK.

15. A computer program comprising program instructions which, when the program is executed by a computer, carry out all steps of the method of anyone of claims 12 or 14.

## Patentansprüche

1. Vorrichtung (104) zur drahtlosen Kommunikation an einem Benutzergerät, UE, umfassend:
einen Speicher; und
zumindest einen Prozessor, der mit dem Speicher gekoppelt ist und konfiguriert ist zum:
Empfangen (602), von einer Basisstation, von zumindest einem Downlink-Paket oder zumindest einer Downlink-Paket-Neuübertragung;
Bestimmen, dass eine Übertragung einer hybriden automatischen Wiederholungsanforderungs-, HARQ-, Rückmeldung, die mit dem zumindest einen Downlink-Paket oder der zumindest einen Downlink-Paket-Neuübertragung assoziiert ist, einer physikalischen Uplink-Kontrollkanal-, PUCCH-, Kollision entspricht;
Bestimmen (604), basierend auf der Bestimmung, dass die Übertragung der HARQ-Rückmeldung einer PUCCH-Kollision entspricht, ob die Übertragung der HARQ-Rückmeldung, die mit dem zumindest einen Downlink-Paket oder der zumindest einen Downlink-Paket-Neuübertragung assoziiert ist, auf eine erste verfügbare PUCCH-Gelegenheit verzögert werden soll, wobei das Bestimmen das Bestimmen enthält, die Übertragung der HARQ-Rückmeldung zu verzögern, wenn die HARQ-Rückmeldung eine ACK ist; und
Abbrechen oder Verzögern (608) der Übertragung der HARQ-Rückmeldung an die Basisstation basierend auf der Bestimmung, ob die Übertragung der HARQ-Rückmeldung verzögert werden soll.

2. Vorrichtung (104) gemäß Anspruch 1, wobei der zumindest eine Prozessor weiterhin konfiguriert ist zum:
Bestimmen einer Dauer von der ersten verfügbaren PUCCH-Gelegenheit bis zu einer Endzeit eines aktuellen industriellen Internet der Dinge-, IIOT-, Zyklus.

3. Vorrichtung (104) gemäß Anspruch 2, wobei die Endzeit des aktuellen IIOT-Zyklus auf einer IIOT-Zyklusdauer basiert, die einem Trainingsprozess entspricht.

4. Vorrichtung (104) gemäß Anspruch 2, wobei die Bestimmung, ob die Übertragung der HARQ-Rückmeldung verzögert werden soll, auf der Dauer basiert, wenn die HARQ-Rückmeldung eine negative ACK, NACK, ist.

5. Vorrichtung (104) gemäß Anspruch 2, wobei die Bestimmung, ob die Übertragung der HARQ-Rückmeldung verzögert werden soll, auf der Dauer basiert.

6. Vorrichtung (104) gemäß Anspruch 5, wobei das Bestimmen, ob die Übertragung der HARQ-Rückmeldung verzögert werden soll, den zumindest einen Prozessor umfasst, der konfiguriert ist, zu bestimmen, die Übertragung der HARQ-Rückmeldung zu verzögern, wenn die Dauer länger als ein Schwellenwert ist, und den zumindest einen Prozessor umfasst, der konfiguriert ist, zu bestimmen, die Übertragung der HARQ-Rückmeldung nicht zu verzögern, wenn die Dauer kürzer als der Schwellenwert ist, wobei der Schwellenwert auf zumindest einem von einer PUCCH-Dauer, einer maximalen Verzögerung zwischen einer Übertragung der HARQ-Rückmeldung und einer entsprechenden Paket-Neuübertragung auf einem physikalischen Downlink-Sharing-Kanal, PDSCH, einer PDSCH-Dauer oder einer Dauer basiert, die mit einer Downlink-Kontrollinformations-, DCI-, Nachricht assoziiert ist, wobei der zumindest eine Prozessor weiterhin konfiguriert ist zum:
Erhalten der maximalen Verzögerung zwischen einer Übertragung der HARQ-Rückmeldung und einer entsprechenden Paket-Neuübertragung auf einem PDSCH basierend auf einem Trainingsprozess.

7. Vorrichtung (104) gemäß Anspruch 1, wobei das Bestimmen, ob die Übertragung der HARQ-Rückmeldung verzögert werden soll, den zumindest einen Prozessor umfasst, der konfiguriert ist, zu bestimmen, die Übertragung der HARQ-Rückmeldung zu verzögern, wenn das zumindest eine Downlink-Paket oder die zumindest eine Downlink-Paket-Neuübertragung auf einer von einer ersten Anzahl von physikalischen Downlink-Shared-Kanal-, PDSCH-, Gelegenheiten innerhalb eines aktuellen industriellen Internet der Dinge-, IIOT-, Zyklus empfangen wird, und den zumindest einen Prozessor umfasst, der konfiguriert ist, zu bestimmen, die Übertragung der HARQ-Rückmeldung nicht zu verzögern, wenn das zumindest eine Downlink-Paket oder die zumindest eine Downlink-Paket-Neuübertragung auf einer PDSCH-Gelegenheit nach der ersten Anzahl von PDSCH-Gelegenheiten innerhalb des aktuellen IIOT-Zyklus empfangen wird.

8. Vorrichtung (104) gemäß Anspruch 1, wobei das Bestimmen, ob die Übertragung der HARQ-Rückmeldung verzögert werden soll, den zumindest einen Prozessor umfasst, der konfiguriert ist, zu bestimmen, die Übertragung der HARQ-Rückmeldung zu verzögern, wenn die erste verfügbare PUCCH-Gelegenheit vor einem Schwellenprozentpunkt einer aktuellen semi-persistenten Scheduling-, SPS-, Periode auftritt, und den zumindest einen Prozessor umfasst, der konfiguriert ist, zu bestimmen, die Übertragung der HARQ-Rückmeldung nicht zu verzögern, wenn die erste verfügbare PUCCH-Gelegenheit nach dem Schwellenprozentpunkt der aktuellen SPS-Periode auftritt, wobei die aktuelle SPS-Periode einem aktuellen industriellen Internet der Dinge-, IIOT-, Zyklus entspricht.

9. Vorrichtung (104) gemäß Anspruch 1, wobei die PUCCH-Kollision mit einer kollidierenden Zeitteilungsduplex-, TDD-, Konfiguration assoziiert ist.

10. Vorrichtung (104) gemäß Anspruch 1, wobei die Übertragung der HARQ-Rückmeldung auf semi-persistentem Scheduling, SPS, basiert.

11. Vorrichtung (104) gemäß Anspruch 1, wobei der zumindest eine Prozessor weiterhin konfiguriert ist zum:
Empfangen, von der Basisstation, einer Anzeige zum Abbrechen oder Verzögern der Übertragung der HARQ-Rückmeldung.

12. Verfahren (600) zur drahtlosen Kommunikation an einem Benutzergerät (UE), umfassend:
Empfangen (602), von einer Basisstation, von zumindest einem Downlink-Paket oder zumindest einer Downlink-Paket-Neuübertragung;
Bestimmen (604), dass eine Übertragung einer hybriden automatischen Wiederholungsanforderungs-, HARQ-, Rückmeldung, die mit dem zumindest einen Downlink-Paket oder der zumindest einen Downlink-Paket-Neuübertragung assoziiert ist, einer physikalischen Uplink-Kontrollkanal-, PUCCH-, Kollision entspricht;
Bestimmen (606), basierend auf der Bestimmung, dass die Übertragung der HARQ-Rückmeldung einer PUCCH-Kollision entspricht, ob die Übertragung der HARQ-Rückmeldung, die mit dem zumindest einen Downlink-Paket oder der zumindest einen Downlink-Paket-Neuübertragung assoziiert ist, auf eine erste verfügbare PUCCH-Gelegenheit verzögert werden soll, wobei das Bestimmen das Bestimmen enthält, die Übertragung der HARQ-Rückmeldung zu verzögern, wenn die HARQ-Rückmeldung eine ACK ist; und
Abbrechen oder Verzögern (608) der Übertragung der HARQ-Rückmeldung an die Basisstation basierend auf der Bestimmung, ob die Übertragung der HARQ-Rückmeldung verzögert werden soll.

13. Vorrichtung (102) zur drahtlosen Kommunikation an einer Basisstation, umfassend:
einen Speicher; und
zumindest einen Prozessor, der mit dem Speicher gekoppelt ist und konfiguriert ist zum:
Übertragen (802), an ein Benutzergerät, UE, zumindest eines Downlink-Pakets oder zumindest einer Downlink-Paketneuübertragung; und
Empfangen (804), von dem UE, einer Übertragung einer hybriden automatischen Wiederholungsanforderungs-, HARQ-, Rückmeldung, die mit dem zumindest einen Downlink-Paket oder der zumindest einen Downlink-Paket-Neuübertragung assoziiert ist, auf einer ersten verfügbaren physikalischen Uplink-Kontrollkanal-, PUCCH-, Gelegenheit, wobei die Übertragung der HARQ-Rückmeldung einer PUCCH-Kollision entspricht, wobei der zumindest eine Prozessor konfiguriert ist, eine verzögerte Übertragung der HARQ-Rückmeldung zu empfangen, wenn die HARQ-Rückmeldung eine ACK ist.

14. Verfahren (800) zur drahtlosen Kommunikation an einer Basisstation, umfassend:
Übertragen (802), an ein Benutzergerät, UE, zumindest eines Downlink-Pakets oder zumindest einer Downlink-Paketneuübertragung; und
Empfangen (804), von dem UE, einer Übertragung einer hybriden automatischen Wiederholungsanforderungs-, HARQ-, Rückmeldung, die mit dem zumindest einen Downlink-Paket oder der zumindest einen Downlink-Paket-Neuübertragung assoziiert ist, auf einer ersten verfügbaren physikalischen Uplink-Kontrollkanal-, PUCCH-, Gelegenheit, wobei die Übertragung der HARQ-Rückmeldung einer PUCCH-Kollision entspricht, wobei das Empfangen ein Empfangen einer verzögerten Übertragung der HARQ-Rückmeldung ist, wenn die HARQ-Rückmeldung eine ACK ist.

15. Computerprogramm, umfassend Programmanweisungen, die, wenn das Programm von einem Computer ausgeführt wird, alle Schritte des Verfahrens gemäß einem der Ansprüche 12 oder 14 ausführen.

## Revendications

1. Un appareil (104) pour la communication sans fil au niveau d'un équipement utilisateur, UE, comprenant :
une mémoire ; et
au moins un processeur couplé à la mémoire et configuré pour :
recevoir (602), à partir d'une station de base, au moins un paquet de liaison descendante ou au moins une retransmission de paquet de liaison descendante ;
déterminer qu'une transmission d'un retour de requête de répétition automatique hybride, HARQ, associé à l'au moins un paquet de liaison descendante ou à l'au moins une retransmission de paquet de liaison descendante correspond à une collision de canal physique de contrôle de liaison montante, PUCCH ;
déterminer (604), sur la base de la détermination que la transmission du retour HARQ correspond à une collision PUCCH, de retarder ou non la transmission du retour HARQ associé à l'au moins un paquet de liaison descendante ou à l'au moins une retransmission de paquet de liaison descendante à une première occasion PUCCH disponible, dans lequel la détermination inclut la détermination de retarder la transmission du retour HARQ lorsque le retour HARK est un ACK ; et
annuler ou retarder (608) la transmission du retour HARQ à la station de base sur la base de la détermination de retarder ou non la transmission du retour HARQ.

2. L'appareil (104) selon la revendication 1, dans lequel l'au moins un processeur est en outre configuré pour :
déterminer une durée depuis la première occasion PUCCH disponible jusqu'à un temps de fin d'un cycle courant de l'Internet des objets industriels, IIOT.

3. L'appareil (104) selon la revendication 2, dans lequel le temps de fin du cycle IIOT courant est basé sur une durée de cycle IIOT correspondant à un processus d'entraînement.

4. L'appareil (104) selon la revendication 2, dans lequel la détermination de retarder ou non la transmission du retour HARQ est basée sur la durée lorsque le retour HARQ est un ACK négatif, NACK.

5. L'appareil (104) selon la revendication 2, dans lequel la détermination de retarder ou non la transmission du retour HARQ est basée sur la durée.

6. L'appareil (104) selon la revendication 5, dans lequel la détermination de retarder ou non la transmission du retour HARQ comprend l'au moins un processeur configuré pour déterminer de retarder la transmission du retour HARQ lorsque la durée est supérieure à un seuil, et comprend l'au moins un processeur configuré pour déterminer de ne pas retarder la transmission du retour HARQ lorsque la durée est inférieure au seuil, dans lequel le seuil est basé sur au moins un parmi une durée PUCCH, un retard maximal entre la transmission du retour HARQ et la retransmission de paquet correspondante sur un canal physique partagé de liaison descendante, PDSCH, une durée PDSCH, ou une durée associée à un message d'information de contrôle de liaison descendante, DCI, dans lequel l'au moins un processeur est en outre configuré pour : obtenir le retard maximal entre une transmission du retour HARQ et une retransmission de paquet correspondante sur un PDSCH sur la base d'un processus d'entraînement.

7. L'appareil (104) selon la revendication 1, dans lequel la détermination de retarder ou non la transmission du retour HARQ comprend l'au moins un processeur configuré pour déterminer de retarder la transmission du retour HARQ lorsque l'au moins un paquet de liaison descendante ou l'au moins une retransmission de paquet de liaison descendante est reçu sur l'un parmi un premier nombre d'occasions de canal physique partagé de liaison descendante, PDSCH, à l'intérieur d'un cycle courant de l'Internet des objets industriels, IIOT, et comprend l'au moins un processeur configuré pour déterminer de ne pas retarder la transmission du retour HARQ lorsque l'au moins un paquet de liaison descendante ou l'au moins une retransmission de paquet de liaison descendante est reçu sur une occasion PDSCH après le premier nombre d'occasions PDSCH à l'intérieur du cycle IIOT courant.

8. L'appareil (104) selon la revendication 1, dans lequel la détermination de retarder ou non la transmission du retour HARQ comprend l'au moins un processeur configuré pour déterminer de retarder la transmission du retour HARQ lorsque la première occasion PUCCH disponible se produit avant un point de pourcentage seuil d'une période de planification semi-persistante, SPS, courante, et comprend l'au moins un processeur configuré pour déterminer de ne pas retarder la transmission du retour HARQ lorsque la première occasion PUCCH disponible se produit après le point de pourcentage seuil de la période SPS courante, dans lequel la période SPS courante correspond à un cycle courant de l'Internet des objets industriels, IIOT.

9. L'appareil (104) selon la revendication 1, dans lequel la collision PUCCH est associée à une configuration de duplexage par répartition dans le temps, TDD, conflictuelle.

10. L'appareil (104) selon la revendication 1, dans lequel la transmission du retour HARQ est basée sur une planification semi-persistante, SPS.

11. L'appareil (104) selon la revendication 1, l'au moins un processeur étant en outre configuré pour :
recevoir, à partir de la station de base, une indication pour annuler ou retarder la transmission du retour HARQ.

12. Un procédé (600) de communication sans fil au niveau d'un équipement utilisateur (UE), comprenant :
la réception (602), à partir d'une station de base, d'au moins un paquet de liaison descendante ou d'au moins une retransmission de paquet de liaison descendante ;
la détermination (604) qu'une transmission d'un retour de requête de répétition automatique hybride, HARQ, associé à l'au moins un paquet de liaison descendante ou à l'au moins une retransmission de paquet de liaison descendante correspond à une collision de canal physique de contrôle de liaison montante, PUCCH ;
la détermination (606), sur la base de la détermination que la transmission du retour HARQ correspond à une collision PUCCH, de retarder ou non la transmission du retour HARQ associé à l'au moins un paquet de liaison descendante ou à l'au moins une retransmission de paquet de liaison descendante à une première occasion PUCCH disponible, dans lequel la détermination inclut la détermination de retarder la transmission du retour HARQ lorsque le retour HARK est un ACK ; et
l'annulation ou le retardement (608) de la transmission du retour HARQ à la station de base sur la base de la détermination de retarder ou non la transmission du retour HARQ.

13. Un appareil (102) pour la communication sans fil au niveau d'une station de base, comprenant :
une mémoire ; et
au moins un processeur couplé à la mémoire et configuré pour :
transmettre (802), à un équipement utilisateur, UE, au moins un paquet de liaison descendante ou au moins une retransmission de paquet de liaison descendante ; et
recevoir (804), à partir de l'UE, une transmission d'un retour de requête de répétition automatique hybride, HARQ, associé à l'au moins un paquet de liaison descendante ou à l'au moins une retransmission de paquet de liaison descendante sur une première occasion disponible de canal physique de contrôle de liaison montante, PUCCH, la transmission du retour HARQ correspondant à une collision PUCCH, dans lequel l'au moins un processeur est configuré pour recevoir une transmission retardée du retour HARQ lorsque le retour HARQ est un ACK.

14. Un procédé (800) de communication sans fil au niveau d'une station de base, comprenant :
la transmission (802), à un équipement utilisateur, UE, d'au moins un paquet de liaison descendante ou d'au moins une retransmission de paquet de liaison descendante ; et
la réception (804), à partir de l'UE, d'une transmission d'un retour de requête de répétition automatique hybride, HARQ, associé à l'au moins un paquet de liaison descendante ou à l'au moins une retransmission de paquet de liaison descendante sur une première occasion disponible de canal physique de contrôle de liaison montante, PUCCH, la transmission du retour HARQ correspondant à une collision PUCCH, dans lequel la réception est une réception d'une transmission retardée du retour HARQ lorsque le retour HARQ est un ACK.

15. Un programme de calculateur comprenant des instructions de programme qui, lorsque le programme est exécuté par un calculateur, réalisent toutes les étapes du procédé selon l'une des revendications 12 ou 14.
